# EUROPEAN PATENT SPECIFICATION

(11) **EP 0 773 413 B1**
(45) Date of publication and mention of the grant of the patent: **06.06.2001**
(21) Application number: 97100233.2
(22) Date of filing: 24.02.1994
(51) Int. Cl.: F24F 13/075, F16K 1/16

(54) **Air-direction adjusting apparatus in air-conditioning equipment**
Luftströmungsrichtung-Steuergerät für Klimageräte
Dispositif d'ajustement de la direction de souflage d'air pour appareils de conditionnement

(30) Priority: 05.03.1993 JP 4514293; 24.08.1993 JP 20941993
(43) Date of publication of application: 14.05.1997
(62) Divisional of application: 94301305.2
(73) Proprietor: MITSUBISHI DENKI KABUSHIKI KAISHA, Tokyo 100 (JP)
(72) Inventor: Satoru, Kotoh, c/o Mitsubishi Denki K. K., Amagasaki-shi, Hyogo 661 (JP); Sakuma, Kiyoshi, c/o Mitsubishi Denki K. K., Shizuoka-shi, Shizuoka 422 (JP); Yosida, Takayuki, c/o Mitsubishi Denki K. K., Shizuoka-shi, Shizuoka 422 (JP); Hiromi, Sano, c/o Mitsubishi Denki K. K., Shizuoka-shi, Shizuoka 422 (JP); Katuyuki, Aoki, c/o Mitsubishi Denki K. K., Shizuoka-shi, Shizuoka 422 (JP); Shin'ichi, Suzuki, c/o Mitsubishi Denki K. K., Shizuoka-shi, Shizuoka 422 (JP); Hideaki, Koizumi, Mitsubishi Denki E. E. Co., Ltd., Shizuoka-shi, Shizuoka 422 (JP); Kaoru, Yamamoto, Mitsubishi Denki E. E. Co., Ltd., Shizuoka-shi, Shizuoka 422 (JP); Kunio, Matsushita, Mitsubishi Denki E. E. Co., Ltd, Shizuoka-shi, Shizuoka 422 (JP); Kenichi, Unno, c/oMitsubishi E. E. Co., Ltd., Shizuoka-shi, Shizuoka 422 (JP); Tomoko, Oguma, c/o Mitsubishi K. K., Shizuoka-shi, Shizuoka 422 (JP)
(74) Representative: Godwin, Edgar James

(56) References cited:
- CA-A- 1 054 432
- US-A- 3 908 529
- US-A- 3 937 133
- PATENT ABSTRACTS OF JAPAN vol. 013, no. 462 (M-881), 19 October 1989 & JP 01 181035 A (MATSUSHITA REFRIG CO LTD), 19 July 1989,

## Description

### BACKGROUND OF THE INVENTION

### a) Field of the Invention

The present invention relates to an air-direction adjusting apparatus in an air-conditioning equipment, which is disposed at a blow-outlet thereof.

### b) Description of Related Art

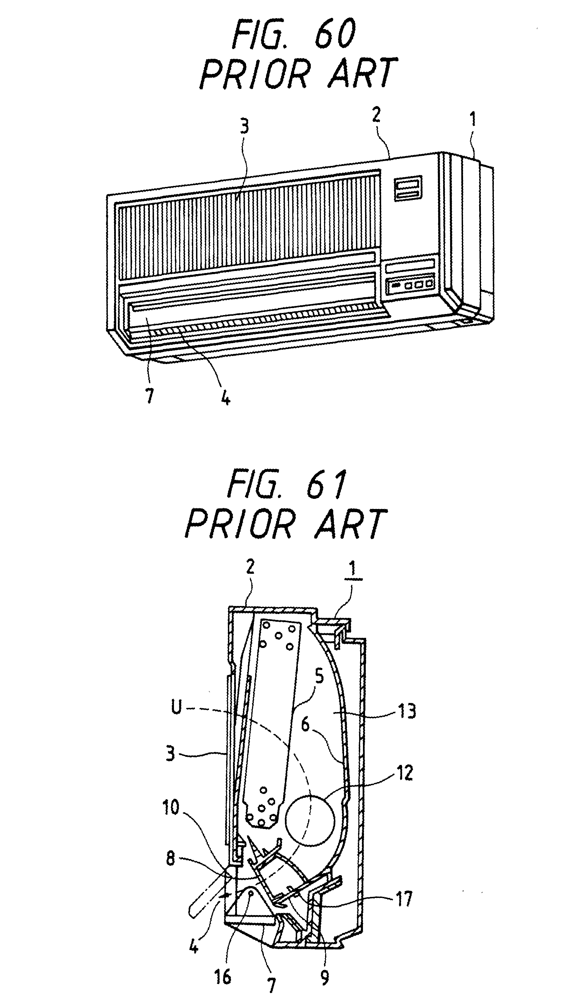

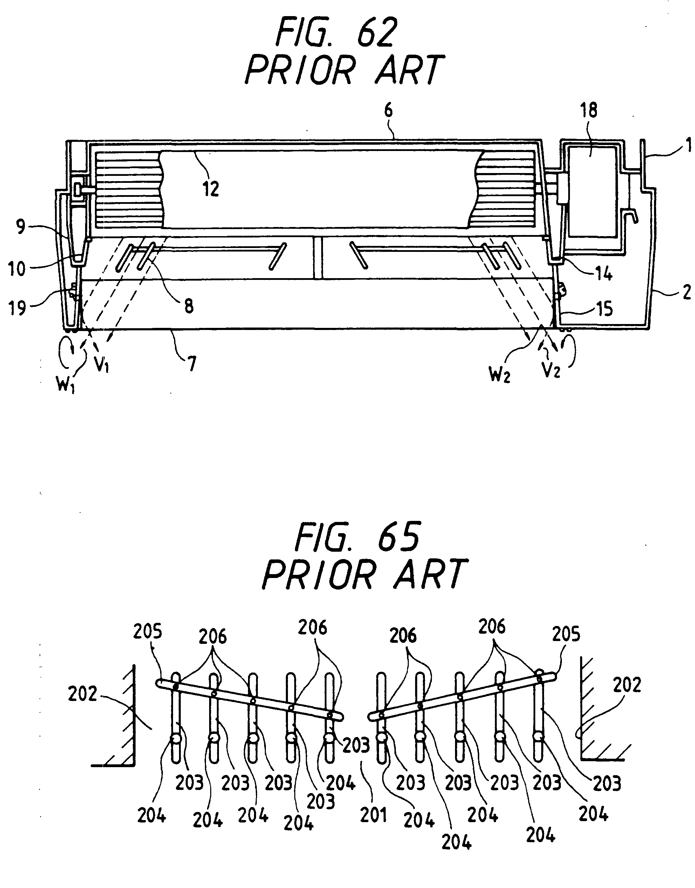

Figs. 60 to 62 are views showing an air-direction adjusting apparatus in a conventional air-conditioning equipment as disclosed in Japanese Utility Model Unexamined Publication No. Sho-58-69735. Fig. 60 is a perspective view of a body of the air-conditioning equipment; Fig. 61 is a cross section of Fig. 60; and Fig. 62 is a vertical section of Fig. 60.

In the drawings, the reference numeral 1 represents a body of an air-conditioning equipment; 2, a front panel having a suction inlet 3 and for covering the front surface of the body 1; 4, a blow-outlet having an opening at a front lower portion of the body 1; 5, a heat exchanger disposed so as to face the suction inlet 3; 6, a casing provided in the inside of the body 1 and for forming an air course 13; 7, a change vane provided at the blow-outlet 4 so as to be pivotally mounted to left and right side walls 11 and 15 of the front panel 2 by a shaft 16 mounted to left and right end portions of the blow-outlet 4 and for changing the air direction to the horizontal direction, the perpendicularly falling direction or an oblique direction; 8, a plurality of parallel guide vanes provided between walls 10 and 14 at left and right side portions of a blow-out nozzle 9 so as to be pivotally held by a pivotal shaft 17 and for changing the air direction to the left-rightwise direction; 9, a blow-out nozzle disposed under the casing 6 and cooperating with the casing 6 to form an air course; 12, a fan disposed on the air course 13 at the blow-out 4 and driven by the motor 18; and 19, coiled springs suspended from the shaft 16.

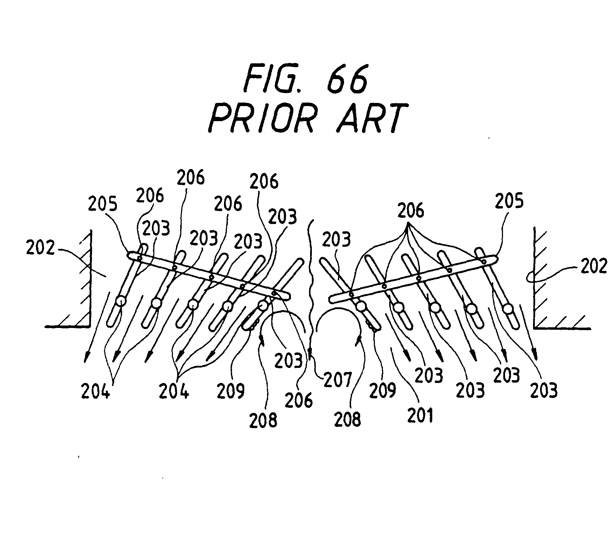

Figs. 65 and 66 are views showing another air-direction adjusting apparatus in a conventional air-conditioning equipment: as disclosed in Japanese Utility Model Unexamined Publication No. Sho-63-147650. Fig. 65 is a cross section of the apparatus; and Fig. 66 is a view for explaining the operating state of the apparatus depicted in Fig. 65. In the drawings, the reference numeral 201 represents a blow-outlet; 202, an inner wall of the blow-outlet 201; and 203, a plurality of vanes disposed at substantially equal intervals and for changing the air direction. As shown in Fig. 65, the plurality of vanes 203 are divided into two groups and the respective groups each of which is composed of a plurality of vanes are provided in the left and right respectively in Fig. 65.

The reference numeral 204 represents shafts which are disposed for the vanes 203 respectively so as to be erected from the inner wall 202 and for pivotally holding the one-end side of an edge portion at one side of each of the vanes 203.

The reference numeral 205 represents connection arms each of which connects a group of vanes 203 and is provided with connection shafts 206 for pivotally holding the other-end side of the edge portion where the respective shafts 204 of the vanes 203 are disposed. As shown in Fig. 65, the connection shafts 206 are arranged in a line inclined with respect to a line connecting the respective shafts 204 of the vanes 203 so that the distance between the shaft 204 of the inner vane 203 and the connection shaft 206 in Fig. 65 is set to be shorter than the distance between the shaft 204 of the outer vane 203 and the connection shaft 206 in Fig. 65.

The other air-direction adjusting apparatus in the conventional air-conditioning equipment shown in Figs. 65 and 66 is configured as described above.

In the air-direction adjusting apparatus in the conventional air-conditioning equipment as shown in Figs. 65 and 66, it is necessary that the respective vanes 203 are produced while the distances between the shafts 204 and the connection shafts 206 are successively changed in accordance with the positions of the arrangement of the vanes 203. There arises a problem that troublesome labor is required for the production and assembling of the vanes 203.

In addition, there arises a problem that the rotating operations of the vanes 203 at the pivotally mounted portions thereof are made smoothless or noise is produced at the pivotally mounted portions.

US-A-3 937 133 discloses an air-direction adjusting apparatus in accordance with the pre-characterising part of claim 1.

### SUMMARY OF THE INVENTION

An object of the present invention is to provide an air-direction adjusting apparatus in an air-conditioning equipment in which not only the vanes make the rotating operations smoothly but noise at the vane portions is reduced.

The invention provides an air-direction adjusting apparatus in an air-conditioning equipment, comprising guide vanes which are disposed in a blow-outlet and which make rotational movement to thereby change the air direction, each vane having a C-shaped annular pivotal bearing which is pivotably mounted on a shaft extending from an inner wall of the blow-outlet, characterised in that a sleeve is fitted into the bearing so as to be held by the bearing, the shaft being inserted into the sleeve, and having claws which project from the upper end portion of the shaft so as to retain the sleeve.

The air-direction adjusting apparatus in an air-conditioning equipment in one embodiment is provided with: vanes disposed at a blow-outlet and making rotational movement to thereby change the air direction; pivotal bearings each of which is provided in an edge portion on one side of each of the vanes to form a C-shape which is such that an annular side thereof is cut-off; sleeves fitted to the pivotal bearings so as to be held by the pivotal bearings respectively; and shafts provided so as to erect from an inner wall of the blow-outlet and inserted into the sleeves respectively, the shafts being provided with claws which are provided at upper ends of the shafts so as to project from the shafts and are engaged with upper edges of the sleeves, respectively.

In the thus configured arrangement, the vanes disposed at a blow-outlet are pivoted on the shafts erected from the inner wall of the blow-outlet through the sleeves and the pivotal bearings.

### BRIEF DESCRIPTION OF THE DRAWINGS

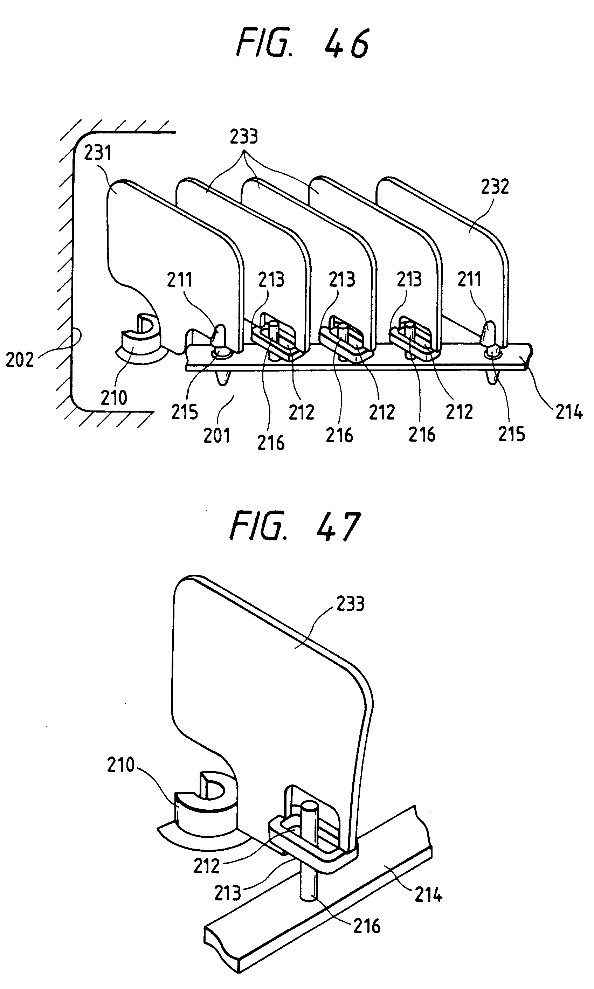

Figs. 1 to 45 are omitted;
Fig. 46 is a perspective view showing part of the blow-outlet of an air-direction adjusting apparatus in an air-conditioning equipment;
Fig. 47 is an enlarged perspective view of part of the apparatus;
Fig. 48 is a cross-sectional plan view of the blow-outlet in another embodiment of the apparatus;
Fig. 49 is an enlarged perspective view of part of the apparatus of Fig. 48;
Figs. 50 to 55 are omitted;
Fig. 56 is a perspective view of a vane showing a pivotal bearing, in accordance with the present invention;
Fig. 57 is a perspective view of the sleeve to be fitted in the pivotal bearing of Fig. 56;
Fig. 58 is a perspective view of the shaft erected on the inner wall of the blow-outlet correspondingly to the vane of Fig. 56;
Fig. 59 is a vertically sectional view showing the assembled state of pivotal bearing of Fig. 56, the sleeve of Fig. 57, and the shaft of Fig. 58;
Fig. 60 is a perspective view showing air-conditioning equipment accordance to the prior art;
Fig. 61 is a cross-sectional view showing the prior art air-conditioning equipment;
Fig. 62 is a vertically sectional view showing the prior art air-conditioning equipment;
Figs. 63 and 64 are omitted;
Fig. 65 is a cross-sectional view showing the air-direction changing apparatus of a prior art air conditioner; and
Fig. 66 is an explanatory view of the operation state of the apparatus of Fig. 65.

In the drawings, the reference numeral 201 represents a blow-outlet; 202, an inner wall of the blow-outlet 201; 231, a first-kind vane disposed to be near the inner wall 201 which is one side of the blow-outlet 1; and 210, a C-shaped pivotal bearing shaped obtained by cutting one side of a ring and provided in the vicinity of one end of an edge portion on one side of the first-kind vane 231.

The reference numeral 211 represents a rotational bearing provided on the other-end side of the edge portion in which the pivotal bearing 210 of the first-kind vane 231 is provided; and 232, a second-kind vane disposed so as to be opposite to the first-kind vane 231 among one group of vanes and formed in the same manner as the first-kind vane 231 so that the second-kind vane is provided with both a pivotal bearing 210 and a rotational bearing 211 but the two bearings are arranged at a shorter distance than the distance in the first-kind vane 231.

The reference numeral 233 represents a plurality of third- kind vanes provided separately between the first-kind vane 231 and the second-kind vane 232. The third-kind vanes are formed in the same manner as the first-kind vane 231 and provided with pivotal bearings 210 provided in positions corresponding to the pivotal bearing 210 of the first-kind vane 231, each of the third-kind vanes being provided with an engagement portion 213 formed on the other-end side of an edge portion where the pivotal bearing 210 is disposed and having an elongated hole (slot) 212 along the length of the edge portion.

The reference numeral 214 represents a connection arm disposed along end portions opposite to the pivotal bearings, of the first-, second- and third-kind vanes 231, 232 and 233. The connection arm has connection shafts 215 provided at its opposite end portions so as to be pivotally held by the rotational bearings 211 of the first- and second-kind vanes 231 and 232 respectively, and intermediate connection shafts 216 provided at its intermediate portion so as to be movably fitted into the elongated holes 212 of the engagement portions 213 of the third- kind vanes 233 respectively.

In the air-direction adjusting apparatus in the air-conditioning equipment configured as described above, the following operation is carried out in the case where two, left and right groups of vanes are disposed in the left and right respectively as shown in Fig. 66 so that the lower sides are far from each other in Fig. 66. That is, the respective end portions opposite to the pivotal bearings 210, of the first-, second- and third-kind vanes 231, 232 and 233 are engaged with the connection arm 214. Particularly the end portions of the third-kind vanes 233 are engaged with the connection arm 214 by the intermediate connection shafts 216 movably fitted into the elongated holes 212 of the engagement portions 213.

Accordingly, the first-, second- and third-kind vanes 231, 232 and 233 are moved respectively in accordance with the lengthwise movement of the connection arm 214 so as to be disposed in inclined posture in the same manner as in the case of Fig. 66.

It is therefore unnecessary that the third-kind vanes 233 are produced while the distances between the pivotal bearings 210 and the engagement portions 213 are successively changed in accordance with the positions of the arrangement of the third- kind vanes 233. Accordingly, the third-kind vanes 233 can be produced easily, so that the air-direction adjusting apparatus in the air-conditioning equipment can be assembled up by simple work.

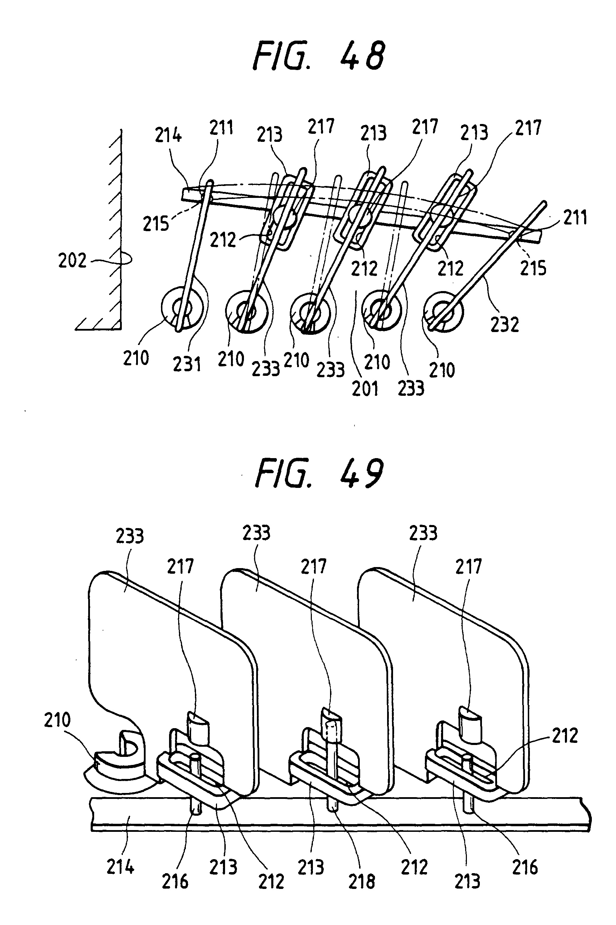

Figs. 48 and 49 are views showing another embodiment. Fig. 48 is a cross-sectional plan view of a blow-outlet; and Fig. 49 is an enlarged perspective view of important part of Fig. 48. The other structure in Figs. 48 and 49 is the same as that in Fig. 65. In the drawings, the reference numeral 201 represents a blow-outlet; 202, an inner wall of the blow-outlet 201; 231, a first-kind vane disposed to be near the inner wall 202 which is one side of the blow-outlet 201; and 210, a C-shaped pivotal bearing obtained by cutting one side of a ring and provided to be near one end of an edge portion on one side of the first-kind vane 231.

The reference numeral 211 represents a rotational bearing provided on the other-end side of the edge portion in which the pivotal bearing 210 of the first-kind vane 231 is provided; and 232, a second-kind vane disposed so as to be opposite to the first-kind vane 231 among one group of vanes and formed in the same manner as the first-kind vane 231 so that the second-kind vane is provided with both a pivotal bearing 210 and a rotational bearing 211 but the two bearings are arranged at a shorter distance than the distance in the first-kind vane 231.

The reference numeral 233 represents a plurality of third- kind vanes provided separately between the first-kind vane 231 and the second-kind vane 232. The third-kind vanes are formed in the same manner as the first-kind vane 231 and provided with pivotal bearings 210 provided in positions corresponding to the pivotal bearing 210 of the first-kind vane 231, each of the third-kind vanes being provided with an engagement portion 213 formed on the other-end side of an edge portion where the pivotal bearing 210 is disposed and having an elongated hole (slot) 212 along the length of the edge portion. The third-kind vanes are further provided with bearing portions 217 provided just above the elongated holes 212, respectively.

The reference numeral 214 represents a connection arm disposed along end portions opposite to the pivotal bearings 210, of the first-, second- and third-kind vanes 231, 232 and 233.

The connection arm 214 has connection shafts 215 provided at its opposite end portions so as to be pivotally held by the rotational bearings 211 of the first- and second-kind vanes 231 and 232 respectively, intermediate connection shafts 216 provided at its intermediate portion so as to be movably fitted into the elongated holes 212 of the engagement portions 213 of the third- kind vanes 233 respectively, and an intermediate joint shaft 218 inserted into the elongated hole 212 of the engagement portion 213 of the third-kind vane 233 disposed in an intermediate portion of the third-kind vanes 233 and pivotally held by the bearing portion 217 of the third-kind vane 233.

In the air-direction adjusting apparatus in the air-conditioning equipment configured as described above, the following operation is carried out in the case where two, left and right groups of vanes are disposed in the left and right respectively as shown in Fig. 66 so that the lower sides are far from each other in Fig. 66. That is, the respective end portions opposite to the pivotal bearings 210, of the first-, second- and third-kind vanes 231, 232 and 233 are engaged with the connection arm 214. Particularly the end portions of the third-kind vanes 233 are engaged with the connection arm 214 by the intermediate connection shafts 216 movably fitted into the elongated holes 212 of the engagement portions 213. Further, the third-kind vane 233 disposed in an intermediate portion of the third-kind vanes 233 is connected to the connection arm 214 by the intermediate joint shaft 218 pivotally held by the bearing portion 217 thereof. Accordingly, the first-, second- and third-kind vanes 231, 232 and 233 are moved respectively in accordance with the lengthwise movement of the connection arm 214 so as to be disposed in inclined posture in the same manner as in the case of Fig. 66.

It is therefore unnecessary that the third-kind vanes 233 are produced while the distances between the pivotal bearings 210 and the engagement portions 213 are successively changed in accordance with the positions of the arrangement of the third- kind vanes 233. Accordingly, the third-kind vanes 233 can be produced easily, so that the air-direction adjusting apparatus in the air-conditioning equipment can be assembled up by simple work.

Further, in the embodiment of Figs. 48 and 49, because the third-kind vane 233 disposed in an intermediate portion of the third-kind vanes 233 is connected to the connection arm 214 through the intermediate joint shaft 218 pivotally held by the bearing portion 217, it is possible to prevented the occurrence of the disadvantage in that the connection arm 214 is distorted by air blowing as represented by the chained line in Fig. 48 to shift the inclination angle of the third-kind vanes 233 from a predetermined value to thereby spoil the air-direction changing effect.

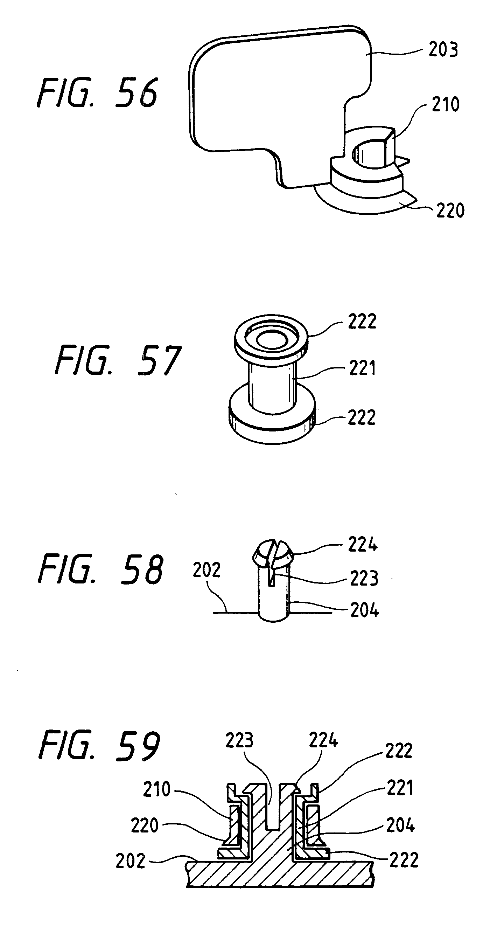

Figs. 56 to 59 are views showing an embodiment of the present invention. Fig. 56 is a perspective view of a vane; Fig. 57 is a perspective view of a sleeve fitted into the pivotal bearing depicted in Fig. 56; Fig. 58 is a perspective view of a shaft erected from the inner wall of the blow-outlet; and Fig. 59 is a vertical section showing the state in which the pivotal bearing of Fig. 56, the sleeve of Fig. 57 and the shaft of Fig. 58 are assembled. The other structure in Figs. 56 to 59 is the same as that in Fig. 65. In the drawings, the reference numeral 210 represents a C-shaped pivotal bearing obtained by cutting one side of a ring. The pivotal bearing 210 is provided in the one- end side of an edge portion on one side of the vane 203 and provided with a flange 220 at its lower side.

The reference numeral 211 represents a sleeve having flanges 222 at its upper and lower portions respectively and fitted into the pivotal bearing 210 so as to be held by the pivotal bearing 210; and 204, a shaft provided so as to be erected from the inner wall 202 of the blow-outlet 201 and fitted into the sleeve 221. In the upper end portion of the shaft 204, there are provided a groove 223 and a claw 224 projected to prevent the dropping-out of the sleeve 221.

In the air-direction adjusting apparatus in the air-conditioning equipment configured as described above, vanes 203 are assembled into two, left and right groups as shown in Fig. 66. The two groups of vanes are arranged so as to be rotatable so that the lower sides are far from each other. The respective vanes 203 are pivotally held, through the sleeves 221 and the pivotal bearings 210, by the shafts 204 erected from the inner wall 202 of the blow-outlet 201 as shown in Fig. 59.

For this reason, the respective vanes 203 make rotating operations smoothly with respect to the shafts 204. Further, the vanes 203 are held by the flanges 220 even in the case where loads perpendicular to the shafts 204 act on the vanes 203 respectively. Accordingly, the pivotal bearings 210 and the sleeves 221 can be assembled in advance, so that assembling can be performed easily. Further, the rotating operations of the vanes 203 at the pivotally mounted portions thereof can be smoothened. In addition, noise at the pivotally mounted portions is reduced, so that quiet environment can be provided.

## Claims

1. An air-direction adjusting apparatus in an air-conditioning equipment, comprising guide vanes (203) which are disposed in a blow-outlet (201) and which make rotational movement to thereby change the air direction, each vane (203) having a C-shaped annular pivotal bearing (210) which is pivotably mounted on a shaft (204) extending from an inner wall (202) of the blow-outlet (201), characterised in that a sleeve (221) is fitted into the bearing (210) so as to be held by the bearing, the shaft (204) being inserted into the sleeve (221) and having claws (224) which project from the upper end portion of the shaft so as to retain the sleeve (221).

2. Apparatus as claimed in claim 1, in which there is a guide vane (231) of a first kind at one end of a set of the guide vanes, a guide vane (232) of a second kind at the other end, and guide vanes (233) of a third kind intermediate the two end guide vanes (231,232), there being non-sliding connections (211/215) between the two end guide vanes (231,232) and a link (214) connecting all the guide vanes of the set.

3. Apparatus as claimed in claim 2, in which each intermediate guide vane (233) has a slot (212) in which a shaft (216) on the link (214) is received to connect the guide vane (233) to the link (214).

4. Apparatus as claimed in claim 3, in which one shaft (218) on the link (214) is received in a bearing portion (217) of one of the intermediate guide vanes (233).

## Patentansprüche

1. Luftströmungsrichtung-Steuervorrichtung in einer Klimaanlage, die Leitflügel (203) aufweist, die in einem Ausströmauslaß (201) angeordnet sind und die eine Drehbewegung ausführen, um dadurch die Luftströmungsrichtung zu ändern, wobei jeder Flügel (203) ein C-förmiges Ringdrehlager (210) hat, das drehbar auf einer Welle (204) angebracht ist, die von einer Innenwand (202) des Ausströmauslasses (201) ausgeht, dadurch gekennzeichnet, daß in das Lager (210) eine Buchse (221) eingepaßt wird, um so durch das Lager gehalten zu werden, wobei die Welle (204) in die Buchse (221) eingesetzt wird und Vorsprünge (224) hat, die vom oberen Endabschnitt der Welle vorstehen, um so die Buchse (221) zu halten.

2. Vorrichtung nach Anspruch 1, bei der an einem Ende eines Satzes von Leitflügeln ein Leitflügel (231) einer ersten Art vorhanden ist, ein Leitflügel (232) einer zweiten Art am anderen Ende und Leitflügel (233) einer dritten Art zwischen den beiden End-Leitflügeln (231, 232) vorhanden sind, wobei zwischen den beiden End-Leitflügeln (231, 232) nicht-gleitende Verbindungen (211/215) vorhanden sind und alle Leitflügel eines Satzes durch ein Verbindungsglied (214) miteinander verbunden werden.

3. Vorrichtung nach Anspruch 2, bei der jeder dazwischenliegende Leitflügel (233) einen Schlitz (212) hat, in dem eine Welle (216) auf dem Verbindungsglied (214) aufgenommen wird, um den Leitflügel (233) mit dem Verbindungsglied (214) zu verbinden.

4. Vorrichtung nach Anspruch 3, bei der eine Welle (218) auf dem Verbindungsglied (214) in einem Lagerabschnitt (217) eines der dazwischenliegenden Leitflügel (233) aufgenommen wird.

## Revendications

1. Dispositif d'ajustement de la direction de soufflage de l'air dans un appareil de climatisation, comprenant des volets de guidage (203) agencés dans un orifice d'évacuation de l'air (201) et effectuant un mouvement de rotation pour changer ainsi la direction de soufflage de l'air, chaque volet (203) comportant un palier pivotant annulaire en C (210), monté par pivotement sur un arbre (204) s'étendant à partir d'une paroi interne (202) de l'orifice d'évacuation de l'air (201), caractérisé en ce qu'un manchon (221) est ajusté dans le palier (210), de sorte à être retenu par le palier, l'arbre (204) étant inséré dans le manchon (221) et comportant des griffes (224) débordant de la partie d'extrémité supérieure de l'arbre de sorte à retenir le manchon (221).

2. Dispositif selon la revendication 1, comportant un volet de guidage (231) d'un premier type au niveau d'une extrémité d'un groupe de volets de guidage, un volet de guidage (232) d'un deuxième type au niveau de l'autre extrémité, et des volets de guidage (233) d'un troisième type entre les deux volets de guidage d'extrémité (231, 232), des connexions non coulissantes (211/215) étant agencées entre les deux volets de guidage d'extrémité (231, 232) et un élément de liaison (214) connectant tous les volets de guidage du groupe.

3. Dispositif selon la revendication 2, dans lequel chaque volet de guidage intermédiaire (233) comporte une fente (212) dans laquelle est reçu un arbre (216) de l'élément de liaison (214) pour connecter le volet de guidage (233) à l'élément de liaison (214).

4. Dispositif selon la revendication 3, dans lequel un arbre (218) sur l'élément de liaison (214) est reçu dans une partie de support (217) de l'un des volets de guidage intermédiaires (233).
